# EUROPÄISCHE PATENTSCHRIFT

(11) **EP 0 389 828 B1**
(45) Veröffentlichungstag und Bekanntmachung des Hinweises auf die Patenterteilung: **04.05.1994**
(21) Anmeldenummer: 90104157.4
(22) Anmeldetag: 03.03.1990
(51) Int. Cl.: F16F 9/06, F16F 9/34, F16F 9/44, F16F 9/54, B60G 15/12

(54) **Hydropneumatisches Federungssystem**
Hydropneumatic spring system
Système de suspension hydropneumatique

(30) Priorität: 29.03.1989 DE 3910119
(43) Veröffentlichungstag der Anmeldung: 03.10.1990
(73) Patentinhaber: HEMSCHEIDT FAHRWERKTECHNIK GmbH & Co., 42109 Wuppertal (DE)
(72) Erfinder: Runkel, Walter, Dr., Dr.-Ing., D-5600 Wuppertal 2 (DE); Hummel, Kurt M., Dipl.-Ing. (FH), D-5600 Wuppertal 1 (DE); Schulte, Rudolf, Dipl.-Ing., D-5828 Ennepetal (DE)
(74) Vertreter: Zapf, Christoph, Dipl.-Ing.

(56) Entgegenhaltungen:
- EP-A- 0 318 817
- GB-A- 1 563 273
- US-A- 4 850 461

## Beschreibung

Die vorliegende Erfindung betrifft ein hydropneumatisches Federungssystem mit mindestens einem Stoß- und Schwingungsdämpfer mit einer Zylinderkolbeneinheit, einem Gasspeicher und einem Dämpfungsventil mit im Hydraulikkreislauf angeordneten Drosselventilen.

Ein derartiges Federungssystem ist beispielsweise aus der DE-OS 36 13 677 bekannt. Dabei ist in einem Zylinder einer hydropneumatischen Kolbenzylindereinheit ein Kolben mit einer hohlzylindrischen Kolbenstange geführt. Innerhalb der Kolbenstange teilt ein freibeweglicher Trennkolben einen Ausgleichsraum für Hydraulikmedium von einem mit kompressiblem Medium gefüllten Gasspeicher. Der Kolben besitzt eine Passage, über die bei der Kolbenbewegung aus einer Zylinderkammer Hydraulikmedium in den Ausgleichsraum oder umgekehrt strömen kann. Dabei bewirkt das in den Ausgleichsraum strömende Medium eine Komprimierung des Gasspeichers über den freibeweglichen Trennkolben und damit eine Federwirkung. In der Passage des Kolbens zwischen der Zylinderkammer und dem Ausgleichsraum ist dabei eine Dämpfungsventil-Anordnung vorgesehen, über die eine Dämpfung der Federung erreicht wird. Allerdings ist hierbei von entscheidendem Nachteil, daß die Dämpfungswirkung fest vorgegeben, d.h. nicht veränderbar ist.

Der vorliegenden Erfindung liegt daher die Aufgabe zugrunde, ein hydropneumatisches Federungssystem der gattungsgemäßen Art so weiterzubilden, daß die Dämpfung beliebig, und zwar insbesondere lastabhängig, veränderbar ist.

Erfindungsgemäß wird dies dadurch erreicht, daß die Drosselventile des Dämpfungsventils in Schließ- oder Öffnungsrichtung mit Federn vorgespannte Ventilelemente aufweisen, wobei die Vorspannung der Federn über auf diese gemeinsam wirkende Stellmittel veränderbar ist.

Aufgrund der Erfindung ist es möglich, die Stellmittel durch den jeweils innerhalb des Gasspeichers vorhandenen Druck anzusteuern, so daß auch die Stellmittel ihrerseits die Drosselventile zur Veränderung von deren Dämpfungswirkung in Abhängigkeit von dem lastabhängigen Druck innerhalb des Gasspeichers ansteuern. Hierdurch kann insbesondere erreicht werden, daß im unbelasteten Zustand des Hydraulikzylinders eine stärkere Einfederungsdämpfung als im belasteten Zustand vorhanden ist, und daß dann die Ausfederungsdämpfung im unbelasteten Zustand niedrig und im belasteten Zustand hoch ist. Diese lastabhängige Dämpfungsverstellung ist deshalb von besonderem Vorteil, da im unbelasteten Zustand die Federsteifigkeit bzw. -vorspannung des Gasspeichers geringer als im belasteten Zustand ist, denn ohne diese Verstellung könnte der unbelastete Zylinder beim Einfedern leicht "durchschlagen" und beim Ausfedern durch eine dann zu hohe Dämpfung "hängenbleiben". Im belasteten Zustand ist für die Einfederung eine geringe Dämpfung erwünscht, damit der Kolben des Hydraulikzylinders trotz der dann hohen Vorspannung des Gasspeichers gut einfedert, und bei der Ausfederung ist eine hohe Dämpfung erwünscht, damit der Kolben aufgrund des unter hohem Druck stehenden Gasspeichers nicht zu schnell, sondern gedämpft ausfedert.

Alternativ hierzu kann durch die Erfindung aber auch für bestimmte Anwendungsfälle erreicht werden, daß im unbelasteten Zustand der Zylinderkolbeneinheit sowohl die Einals auch die Ausfederungsdämpfung gering und im belasteten Zustand beide Dämpfungen hoch sind.

Die Dämpfungs-Verstellung erfolgt dabei zwischen hoher und geringer Dämpfung und umgekehrt natürlich stetig, d.h. in einem "mittleren" Belastungsfall wird auch jeweils eine "mittlere" Dämpfung eingestellt.

Weitere vorteilhafte Ausgestaltungsmerkmale der Erfindung sind in den Unteransprüchen und der folgenden Beschreibung enthalten.

Anhand der Zeichnung soll im folgenden die Erfindung beispielhaft näher erläutert werden. Dabei zeigen:
- Fig. 1: einen Längsschnitt durch eine hydropneumatische Zylinderkolbeneinheit des erfindungsgemäßen Federungssystems während des Einfederns,
- Fig. 2: einen Längsschnitt analog zu Fig. 1 während des Ausfederns,
- Fig. 3: ein Federkennliniendiagramm mit zwei Belastungszuständen des Gasspeichers der Zylinderkolbeneinheit,
- Fig. 4: eine vereinfachte Prinzipdarstellung eines im wesentlichen aus einer Zylinderkolbeneinheit und einem mit dieser verbundenen, externen Dämpfungsventil bestehenden Federungssystems gemäß der Erfindung,
- Fig. 5: eine Darstellung analog zu Fig. 4 mit einer alternativen Ausgestaltung des Dämpfungsventils,
- Fig. 6: eine Darstellung des Dämpfungsventils wie in Fig. 4 bzw. 5 in einer weiteren Alternativausbildung,
- Fig. 7: eine prinzipielle Hydraulikschaltung des erfindungsgemäßen Federungssystems zur lastabhängigen Niveaueinstellung,
- Fig. 8: eine Hydraulikschaltung zur lastabhängigen Niveaueinstellung sowie zusätzlich zur Blockierung der Federung und
- Fig. 9: eine Hydraulikschaltung wie in Fig. 8 mit zusätzlicher, lastunabhängiger Niveaueinstellung.

In den verschiedenen Figuren der Zeichnung sind gleiche Teile und Komponenten jeweils mit den gleichen Bezugszeichen bezeichnet.

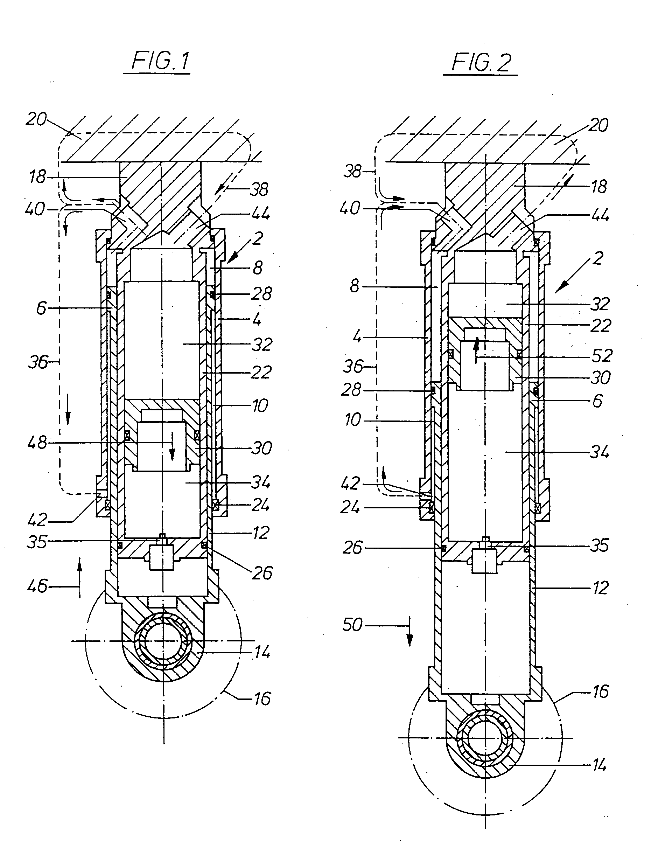

In Fig. 1 und 2 ist jeweils eine Zylinderkolbeneinheit 2 des erfindungsgemäßen hydropneumatischen Federungssystems dargestellt. Diese Zylinderkolbeneinheit 2 besteht aus einem Hydraulikzylinder 4, in dem ein Kolben 6 axialbeweglich geführt ist. Der Kolben 6 teilt innerhalb des Zylinders 4 zwei mit einem Hydraulikmedium gefüllte Kammern 8 und 10 ab und ist mit einer Kolbenstange 12 mechanisch verbunden, die gegen den Zylinder 4 abgedichtet nach außen geführt ist. An ihrem freien, nach außen geführten Ende besitzt die Kolbenstange 11 ein Anschlußstück 14, welches mit einer lediglich durch einen strichpunktierten Kreis 16 angedeuteten, zu dämpfenden bzw. zu federnden Masse, insbesondere einem Fahrzeugrad, verbindbar ist. Der Zylinder 4 ist mit einem gegenüberliegenden Kopfteil 18 beispielsweise an einem ebenfalls nur angedeuteten Fahrzeugrahmen 20 zu befestigen.

Vorzugsweise sind - wie in Fig. 1 und 2 zu erkennen - die Kolbenstange 12 hohlzylindrisch und der Kolben 6 ringförmig ausgebildet. Innerhalb des Zylinders 4 ist dabei ein an dem Kopfteil 18 befestigtes Innenrohr 22 koaxial angeordnet, welches sich etwa bis zu dem dem Kopfteil 18 gegenüberliegenden Ende des Zylinders 4 oder aber - wie dargestellt - etwas darüber hinaus sowie dabei mit geringem Spiel durch den ringförmigen Kolben 6 hindurch und in die hohlzylindrische Kolbenstange 12 hinein erstreckt. Somit umschließt der Kolben 6 das Innenrohr 22 in einem zwischen diesem und dem Zylinder 4 gebildeten Zylinder-Ringraum mit geringem Umfangsspiel. Aufgrund dieser Ausgestaltung sind die über den Kolben 6 getrennten Kammern 8 und 10 als Ringkammern ausgebildet.

Diese bevorzugte Ausgestaltung der Zylinderkolbeneinheit 2 ist insofern von besonderem Vorteil, als diese hierdurch eine sehr hohe Stabilität zur Aufnahme extrem hoher Querkräfte erhält, da die hohlzylindrische Kolbenstange vorteilhafterweise mit ihrer Innenwandung über den gesamten Hub des Kolbens 6 auf dem Außenmantel des Innenrohrs 22 geführt ist.

Zur Abdichtung der Kolbenstange 12 ist einerseits zwischen dieser und dem Zylinder 4 ein äußerer Dichtring 24 angeordnet. Andererseits ist zwischen dem Innenrohr 22 und dem Innenumfang der Kolbenstange 12 ein innerer Dichtring 26 angeordnet. Der Kolben 6 ist gegen den Zylinder 4 über einen Kolbendichtring 28 abgedichtet.

Innerhalb des Innenrohrs 22 ist nun weiterhin ein Trennkolben 30 freibeweglich, d.h. schwimmend, geführt. Dieser Trennkolben 30 trennt einen auf seiner dem Kopfteil 18 zugekehrten Seite angeordneten, mit Hydraulikmedium gefüllten Ausgleichsraum 32 von einer auf der anderen Seite des Trennkolbens 30 liegenden, als pneumatische Feder wirkenden Gasspeicher 34. Innerhalb des Gasspeichers 34 ist ein elastisch kompressibles Medium, beispielsweise Luft, angeordnet, und zwar gegebenenfalls unter einem eine Vorspannung bewirkenden Überdruck.

In der dargestellten Ausführungsform der Erfindung weist einerseits das Innenrohr 22 im Bereich seiner dem nach außen geführten Ende der Kolbenstange 12 zugekehrten Bodenwandung eine Öffnung 35 auf, während andererseits die hohlzylindrische Kolbenstange 12 im Bereich ihres aus dem Zylinder 4 ragenden Endes gasdicht geschlossen ist. Hierdurch erhält vorteilhafterweise der Gasspeicher 34 ein großes Volumen, was einen Einfluß auf die pneumatische Federkraft und/oder Federkennlinie der Zylinderkolbeneinheit 2 hat. Es liegt jedoch ebenfalls im Rahmen der Erfindung, das Innenrohr 22 in seinem freien, dem nach außen geführten Ende der Kolbenstange 12 zugekehrten Endbereich gasdicht geschlossen auszubilden, wobei dann die Kolbenstange 12 in ihrem sich axial über das Innenrohr 22 hinaus nach außen erstreckenden Bereich eine Lüftungsöffnung besitzen kann. Diese - nicht dargestellte - Alternative hat ebenfalls eine Einwirkung auf die Federcharakteristik der von dem Gasspeicher 34 gebildeten, pneumatischen Feder.

Die dem Kopfteil 18 zugekehrte, obere Ringkammer 8 ist nun einerseits mit der dem Kopfteil 8 abgekehrten, unteren Ringkammer 10 sowie andererseits auch mit dem Ausgleichsraum 32 verbunden, und zwar vorzugsweise über externe Verbindungsleitungen 36, 38 (in Fig. 1 und 2 gestrichelt eingezeichnet), zu deren Anschluß die obere Ringkammer 8 einen Anschluß 40, die untere Ringkammer 10 einen Anschluß 42 und der Ausgleichsraum 32 einen Anschluß 44 aufweisen.

In einer nicht dargestellten, alternativen Ausführungsform der Erfindung könnten die beschriebenen Verbindungen jedoch auch intern gebildet sein, und zwar durch mindestens eine die Ringkammern 8 und 10 verbindende Durchgangsöffnung des Kolbens 6 und eine die obere Ringkammer 8 mit dem Ausgleichsraum 32 verbindende Passage in dem Kopfteil 18.

Die prinzipielle Funktionsweise der Zylinderkolbeneinheit 2 ist nun wie folgt:
In Fig. 1 ist der Einfederungsvorgang dargestellt, bei dem über die Kolbenstange 12 der Kolben 6 in Pfeilrichtung 46 in den Zylinder 4 hineinbewegt wird. Hierdurch wird Hydraulikmedium aus der oberen Ringkammer 8 verdrängt, und zwar einerseits in die untere Ringkammer 10, andererseits aber auch in den Ausgleichsraum 32, wobei das in den Ausgleichsraum 32 verdrängte Volumen des Hydraulikmediums dem in den Zylinder 4 hineinbewegten Volumen der Kolbenstange 12 entspricht. Durch dieses Volumen der Kolbenstange 12 wird nämlich bewirkt, daß die untere Ringkammer 10 weniger Hydraulikmedium aufnehmen kann, als aus der oberen Ringkammer 8 verdrängt wird. Das in den Ausgleichsraum 32 einströmende Hydraulikmedium bewirkt nun eine Verschiebung des Trennkolbens 30 in Pfeilrichtung 48 in Richtung des Gasspeichers 34, dessen Volumen sich hierdurch verkleinert, wodurch der Druck des innerhalb des Gasspeichers 34 vorhandenen Gasmediums sich durch Komprimierung vergrößert. Dies bewirkt eine Abfederung der Einschubbewegung des Kolbens 6 in Pfeilrichtung 46. Die Einschubbewegung endet, wenn zwischen der Belastung und dem Innendruck des Gasspeichers 34 ein Gleichgewicht erreicht ist (Gleichgewicht zwischen der auf die Zylinderkolbeneinheit 2 wirkenden Kraft und der Kraft "Gasdruck mal beaufschlagte Oberfläche des Trennkolbens 30").

In Fig. 2 ist nun der Ausfederungsvorgang dargestellt, bei dem sich die Kolbenstange 12 zusammen mit dem Kolben 6 in Pfeilrichtung 50 aus dem Zylinder 4 hinausbewegt. Dies erfolgt beispielsweise bei einer Reduzierung der Belastung. In diesem Fall sorgt der Druck innerhalb des Gasspeichers 34 dafür, daß sich der Trennkolben 30 in Pfeilrichtung 52 in Richtung des Kopfteils 18 verschiebt und dabei Hydraulikmedium aus dem Ausgleichsraum 32 verdrängt wird. Dieses verdrängte Hydraulikmedium strömt zurück in die obere Ringkammer 8. Außerdem strömt Hydraulikmedium aus der unteren Ringkammer 10 zurück in die obere Ringkammer 8. Auch diese Ausfederungsbewegung endet bei Erreichen eines Gleichgewichts zwischen Belastung und Innendruck des Gasspeichers 34.

Die Federungswirkung der hydropneumatischen Zylinderkolbeneinheit 2 wird demzufolge durch Komprimieren und Entspannen des Gasvolumens innerhalb des Gasspeichers 34 erreicht.

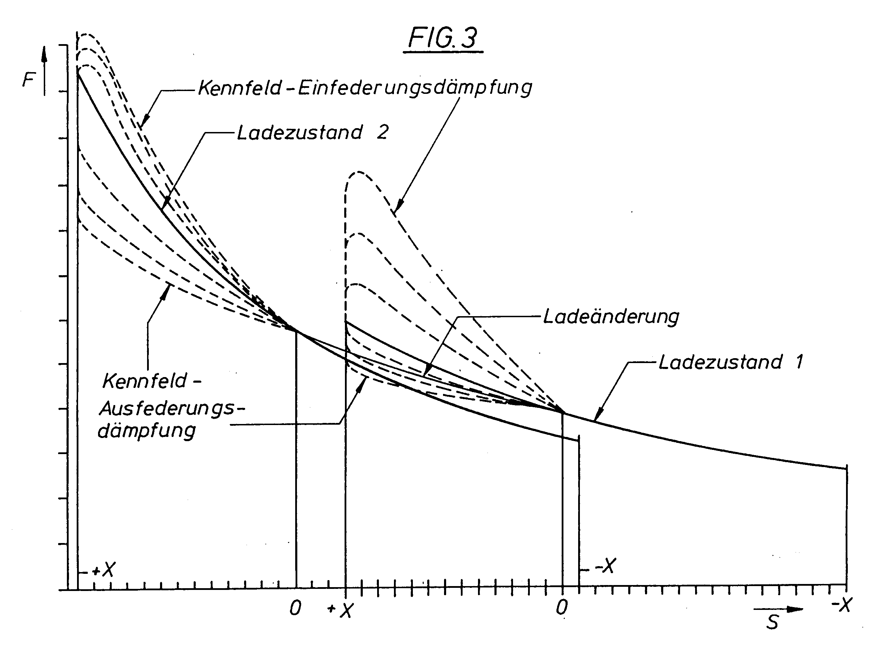

In Fig. 3 ist ein Federkennlinien-Diagramm des Gasspeichers 34 dargestellt, wobei auf der Ordinatenachse die von dem Gasspeicher 34 erzeugte Kraft F und auf der Abszissenachse der Weg bzw. Kolbenhub s der Zylinderkolbeneinheit 2 aufgetragen sind. Dabei sind für zwei Ladezustände 1 und 2 die Federkennlinien als durchgezogene Linien eingezeichnet (Ladezustand 1 - geringe Ladung; Ladezustand 2 - hohe Ladung). Mit "0" ist dabei jeweils die statische, neutrale Stellung gekennzeichnet, während "+ X" die maximale Einfederung und "- X" die maximale Ausfederung bezeichnen. Hieraus ist gut zu erkennen, daß die Federung des Gasspeichers 34 einen progressiven Verlauf hat, d.h. daß die Federkennlinie mit einem progressiven Anstieg umso steiler wird, je höher die Belastung, d.h. der Druck im Gasspeicher 34, ist. Diese Federcharakteristik ist insbesondere für das Fahrverhalten eines Fahrzeugs sehr günstig, denn eine nicht lineare, progressive Federkennlinie hat den Vorteil, daß das Federsystem nicht so leicht zum Aufschaukeln neigt, da es keine Eigenfrequenz hat. Ein Aufschaukeleffekt könnte nur durch eine der Federcharakteristik entsprechende Anregung erfolgen. Trotz der nicht linearen Federcharakteristik der erfindungsgemäßen Zylinderkolbeneinheit 2 ist erfindungsgemäß jedoch eine zusätzliche Dämpfung des Federungssystems vorgesehen, die im folgenden erläutert werden soll.

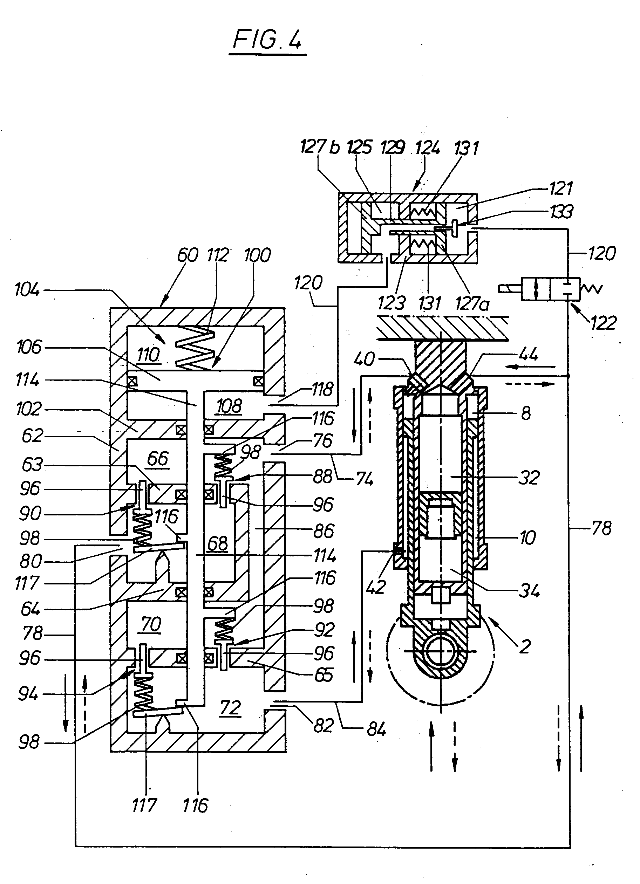

In den Fig. 4 bis 6 sind drei mögliche Ausführungsformen eines Dämpfungsventils 60 schematisch dargestellt. Die Zylinderkolbeneinheit 2 bildet zusammen mit dem Dämpfungsventil 60 einen hydropneumatischen Stoß- und Schwingungsdämpfer. Bei dem erfindungsgemäßen hydropneumatischen Federungssystem ist das Dämpfungsventil 60 nun vorzugsweise als bezüglich der Zylinderkolbeneinheit 2 externes Bauelement, d.h. von der Zylinderkolbeneinheit 2 räumlich getrennt ausgebildet. Demgegenüber wäre es zwar ebenfalls möglich, Dämpfungs- bzw. Drosselventile in internen Verbindungen zwischen den Ringkammern 8, 10 (Kolbendurchgangsöffnung) und/oder zwischen der oberen Ringkammer 8 und dem Ausgleichsraum 32 (Passage im Kopfteil) anzuordnen, allerdings ist die hier dargestellte und beschriebene, bevorzugte, externe Ausführung insofern von besonderem Vorteil, als hierdurch eine Erwärmung der Zylinderkolbeneinheit 2, und zwar insbesondere des Gasspeichers 34, vermieden wird, wenn sich das Hydraulikmedium, bedingt durch die Drosselung bzw. Dämpfung, erwärmt. Es werden hierdurch vorteilhafterweise wärmeänderungsbedingte Veränderungen des Gasdruckes in dem Gasspeicher 34 und damit auch ungewollte Änderungen der Federcharakteristik verbunden mit ungewollten Niveauänderungen vorteilhafterweise vermieden.

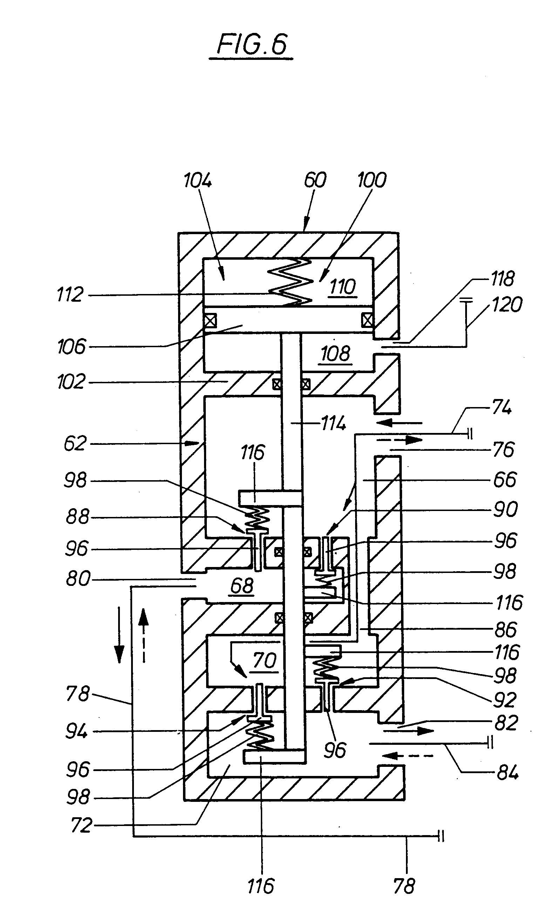

Gemäß Fig. 4 und 6 besteht nun das Dämpfungsventil 60 aus einem Ventilgehäuse 62, in dem hintereinander jeweils über Trennwände 63, 64, 65 getrennt eine erste Ventilkammer 66, eine zweite Ventilkammer 68, eine dritte Ventilkammer 70 und eine vierte Ventilkammer 72 gebildet sind. In die erste Ventilkammer 66 mündet zum Anschluß einer Verbindungsleitung 74 ein erster Anschluß 76, die zweite Ventilkammer 68 weist zum Anschluß einer Verbindungsleitung 78 einen zweiten Anschluß 80 auf und die vierte Ventilkammer 72 besitzt einen dritten Anschluß 82 zum Anschluß einer Verbindungsleitung 84. Die erste Ventilkammer 66 steht über einen Gehäusekanal 86 unmittelbar mit der dritten Ventilkammer 70 in Verbindung. Die erste Ventilkammer 66 und die zweite Ventilkammer 68 sind über zwei in Passagen der Trennwand 63 angeordnete, gegensinnig gerichtete Drosselventile 88 und 90 miteinander verbunden. In gleicher Weise sind auch die dritte Ventilkammer 70 und die vierte Ventilkammer 72 über zwei gegensinnig gerichtete, in Passagen der Trennwand 65 angeordnete Drosselventile 92, 94 verbunden. Jedes Drosselventil 88, 90, 92 und 94 besitzt ein nur stark vereinfacht dargestelltes Ventilelement 96.

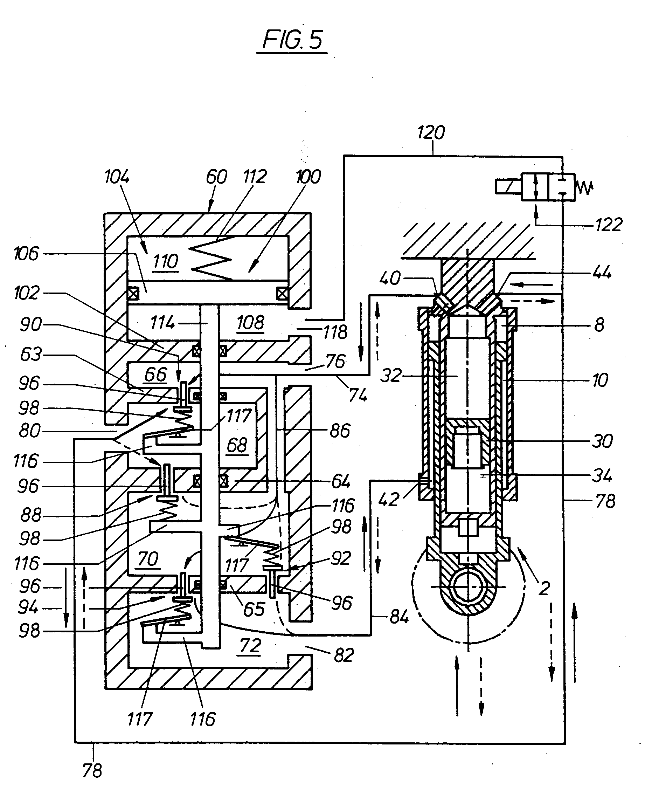

Die Ausführung des Dämpfungsventils 60 nach Fig. 5 entspricht im wesentlichen derjenigen der Fig. 4 bzw. 6, wobei gleiche Teile mit gleichen Bezugsziffern bezeichnet sind. Hierbei ist allerdings das Drosselventil 88 für die Ausfederungsdämpfung der Strömung aus dem Ausgleichsraum 32 in die obere Ringkammer 8 nicht in der Trennwand 63 zwischen der ersten Ventilkammer 66 und der zweiten Ventilkammer 68, sondern in der Trennwand 64 zwischen der zweiten Ventilkammer 68 und der dritten Ventilkammer 70 angeordnet.

In allen Ausführungen ist nun jeweils der Anschluß 76 der ersten Ventilkammer 66 über die Verbindungsleitung 74 mit dem Anschluß 40 der oberen Ringkammer 8 der Zylinderkolbeneinheit 2 verbunden. Weiterhin sind der Anschluß 80 der zweiten Ventilkammer 68 über die Verbindungsleitung 78 mit dem Anschluß 44 des Ausgleichsraums 32 sowie der Anschluß 82 der vierten Ventilkammer 72 über die Verbindungsleitung 84 mit dem Anschluß 42 der unteren Ringkammer 10 der Zylinderkolbeneinheit 2 verbunden.

Aufgrund der beschriebenen Ausgestaltung des Dämpfungsventils 60 sowie der Zuordnung der Anschlüsse (Schaltung zwischen Dämpfungsventil 60 und Zylinderkolbeneinheit 2) besitzen die einzelnen Drosselventile folgende Funktion:
- Drosselventil 90 -: Dämpfung der Einfederungsströmung von der oberen Ringkammer 8 zum Ausgleichsraum 32,
- Drosselventil 94 -: Dämpfung der Einfederungsströmung von der oberen Ringkammer 8 zur unteren Ringkammer 10,
- Drosselventil 88 -: Dämpfung der Ausfederungsströmung vom Ausgleichsraum 32 zur oberen Ringkammer 8 und
- Drosselventil 92 -: Dämpfung der Ausfederungsströmung von der unteren Ringkammer 10 zur oberen Ringkammer 8.

Das Dämpfungsventil 60 hat nun folgende Wirkungsweise:

### 1. Einfedern (voll gezeichnete Pfeile)

Beim Einfedern der Zylinderkolbeneinheit 2 wird Hydraulikmedium aus der oberen Ringkammer 8 verdrängt und strömt über die Verbindungsleitung 74 in die erste Ventilkammer 66 des Dämpfungsventils 60 ein. Ein erstes Teilvolumen des verdrängten Hydraulikmediums strömt aus der ersten Ventilkammer 66 über den Gehäusekanal 86 in die dritte Ventilkammer 70, aus dieser über das Drosselventil 94 in die vierte Ventilkammer 72 und von hier über die Verbindungsleitung 84 in die untere Ringkammer 10 der Zylinderkolbeneinheit 2. Entsprechend dem Volumen der in den Zylinder 4 hinein verschobenen Kolbenstange 12 strömt ein zweites Teilvolumen des Hydraulikmediums aus der ersten Ventilkammer 66 über das Drosselventil 90 in die zweite Ventilkammer 68 und von hier über die Verbindungsleitung 78 in den Ausgleichsraum 32 der Zylinderkolbeneinheit 2. Hierdurch wird - wie oben beschrieben - über den Trennkolben 30 das Volumen des Gasspeichers 34 verkleinert und hierdurch eine Federwirkung erreicht. Bezüglich der Einfederungsdämpfung sind erfindungsgemäß die beiden Drosselventile 90 und 94 parallelgeschaltet. Die jeweils anderen beiden Drosselventile 88 und 92 wirken beim Einfedern als Rückschlagventile und sind daher geschlossen.

### 2. Ausfedern (gestrichelt gezeichnete Pfeile).

Beim Ausfedern kehrt sich nun jeweils die Strömungsrichtung um. Dies bedeutet, daß einerseits aus dem Ausgleichsraum 32 aufgrund des pneumatischen Druckes des Gasspeichers 34 Hydraulikmedium verdrängt wird, welches über die Verbindungsleitung 78 in die zweite Ventilkammer 68 und von hier nunmehr über das Drosselventil 88 entweder direkt in die erste Ventilkammer 66 (Fig. 4 und 6) oder in der Ausführung nach Fig. 5 zunächst in die dritte Ventilkammer 70 und von hier über den Gehäusekanal 86 in die erste Ventilkammer 66 gelangt. Weiterhin gelangt auch das entsprechende Teilvolumen der Hydraulikflüssigkeit aus der unteren Ringkammer 10 über die Verbindungsleitung 84, die vierte Ventilkammer 72, das Drosselventil 92, die dritte Ventilkammer 70 sowie den Gehäusekanal 86 in die erste Ventilkammer 66. Aus der ersten Ventilkammer 66 gelangt dann das gesamte Volumen der Hydraulikflüssigkeit über die Verbindungsleitung 74 zurück in die obere Ringkammer 8 der Zylinderkolbeneinheit 2. Beim Ausfedern sind demzufolge die Drosselventile 92 und 88 parallelgeschaltet. Die jeweils anderen Drosselventile 90 und 94 sind beim Ausfedern aufgrund ihrer Rückschlagwirkung geschlossen.

Durch das Dämpfungsventil 60 wird demzufolge beim Ein- und Ausfedern der Zylinderkolbeneinheit 2 eine Dämpfung dadurch erreicht, daß die jeweils umgepumpte Hydraulikmittelmenge aus den einzelnen Kammern des hydropneumatischen Zylinders jeweils durch zwei parallelgeschaltete Drosselventile 90, 94 bzw. 88, 92 strömt, was eine sehr individuelle Dämpfungseinstellung möglich macht, da die jeweils zwei Teilströmungen beim Ein- und Ausfedern unterschiedlich gedämpft werden können. Dabei bildet der Anschluß 76 des Dämpfungsventils 60 beim Einfedern einen gemeinsamen Eingang sowie beim Ausfedern einen gemeinsamen Ausgang für die beiden parallelen Strömungswege. Beim Einfedern bilden die Anschlüsse 80 und 82 getrennte Ausgänge und beim Ausfedern getrennte Eingänge für die beiden Strömungswege.

Die Drosselventile 88 bis 94 sind dabei derart ausgebildet, daß mit steigender Strömungsgeschwindigkeit des Hydraulikmediums die Drosselwirkung in den Drosselventilen stärker wird, so daß vorteilhafterweise in Abhängigkeit von der Ein- bzw. Ausfederungsgeschwindigkeit der hydropneumatischen Zylinderkolbeneinheit 2 die Bewegung der zu dämpfenden Masse mehr oder weniger stark gedämpft wird.

Zusätzlich zu dieser bisher beschriebenen, prinzipiellen Wirkungsweise des Dämpfungsventils 60 ist nun vorgesehen, das Dämpfungsventil 60 bzw. dessen Drosselventile 88 bis 94 derart zu beeinflussen, daß die Dämpfung insbesondere in Abhängigkeit von dem Belastungszustand der Zylinderkolbeneinheit 2 veränderbar ist. Diese Maßnahme soll nun im folgenden anhand der Fig. 4 bis 6 näher erläutert werden.

Die Ventilelemente 96 der vier Drosselventile 88 bis 94 sind hierzu jeweils über eine Feder 98 in Schließrichtung, d.h. in eine der über das jeweilige Drosselventil geführten, zu dämpfenden Strömung entgegengesetzte Richtung, vorgespannt. Erfindungsgemäß ist nun hierbei zum Verändern bzw. Beeinflussen der Dämpfung die Vorspannung jeder der Federn 98 über gemeinsam auf diese wirkende Stellmittel 100 veränderbar. Diese Stellmittel 100 sollen nun im folgenden näher erläutert werden.

An die erste Ventilkammer 66 des Dämpfungsventils 60 schließt sich auf ihrer der zweiten Ventilkammer 68 abgekehrten Seite über eine Trennwand 102 eine Zylinderkammer 104 an. Innerhalb dieser Zylinderkammer 104 ist ein Kolben 106 geführt, der die Zylinderkammer 104 in eine der Trennwand 102 zugekehrte Druckmittelkammer 108 und eine der Trennwand 102 abgekehrte Federkammer 110 unterteilt.

Innerhalb der Federkammer 110 ist eine den Kolben 106 in Richtung der Trennwand 102 bzw. in Richtung der Ventilkammern 66 bis 72 drängende Stellfeder 112 angeordnet, die im dargestellten Beispiel als vorgespannte Spiraldruckfeder ausgebildet ist. Es liegt jedoch im Rahmen der Erfindung, innerhalb der Federkammer 110 auch eine andere vorgespannte Feder vorzusehen, wie beispielsweise ein kompressibles, unter Vorspanndruck stehendes Gas zur Bildung einer pneumatischen Druckfeder.

Der Kolben 106 ist mechanisch mit einer Kolbenstange 114 verbunden, die sich abgedichtet durch eine Öffnung der Trennwand 102 erstreckt und weiter durch die erste Ventilkammer 66, abgedichtet durch eine Öffnung der Trennwand 63, durch die zweite Ventilkammer 68, abgedichtet durch eine Öffnung der Trennwand 64, durch die dritte Ventilkammer 70 sowie weiter abgedichtet durch eine Öffnung der Trennwand 65 bis in die vierte Ventilkammer 72 hinein.

Die Kolbenstange 114 besitzt nun für jedes Ventilelement 96 der Drosselventile 88 bis 94 ein sich zur Seite in Richtung des jeweiligen Ventilelements 96 erstreckendes Widerlagerelement 116, und zwar jeweils auf derjenigen Seite des Ventilelementes 96, von der her dieses mit Vorspannung beaufschlagt werden soll und auf der demzufogle auch die Feder 98 angeordnet ist.

Je nach Art der gewünschten "Richtung" der Verstellung der Vorspannung der jeweiligen Feder 98 (Erhöhung/Reduzierung der Vorspannung) ist nun die Feder 98 entweder unmittelbar zwischen dem Ventilelement 96 und dem zugeordneten Widerlagerelement 116 der Kolbenstange 114 (Fig. 4, Drosselventile 88, 92; Fig. 5, Drosselventil 88; Fig. 6, alle Drosselventile 88 bis 94) oder aber zwischen dem Ventilelement 96 und einem zusätzlichen, mechanischen "Kraftumkehrelement" 117 unter Vorspannung angeordnet (Fig. 4, Drosselventile 90, 94; Fig. 5, Drosselventile 90, 92, 94). Diese Kraftumkehrelemente 117 sind in den dargestellten Beispielen als wippenartig in dem Gehäuse 62 schwenkbeweglich abgestützte Hebel ausgebildet, wobei jeweils zwischen einem Hebelabschnitt und dem Ventilelement 96 die Feder 98 angeordnet ist und das Widerlagerelement 116 zur Verstellung der Vorspannung der Feder 98 gegen den anderen Hebelabschnitt wirkt.

In die Druckmittelkammer 108 mündet nun erfindungsgemäß ein Anschluß 118 zum Anschluß einer Verbindungsleitung 120, die erfindungsgemäß über ein Schaltventil 122 mit dem Anschluß 44 des Ausgleichsraums 32 der Zylinderkolbeneinheit 2 verbunden ist (s. Fig. 4 und 5). Im Falle der Fig. 4 ist in die Verbindungsleitung 120 ein hydraulisches Steuerventil 124 zur Druckumkehr sowie vorzugsweise als Sicherheitsventil geschaltet. Dieses Steuerventil 124 besitzt eine über die Verbindungsleitung 120 mit dem Schaltventil 122 verbundene, erste Druckkammer 121 und eine von dieser über eine Trennwand 123 getrennte, über die Verbindungsleitung 120 mit dem Anschluß 118 der Druckmittelkammer 108 des Dämpfungsventils 60 verbundene, zweite Druckkammer 125. Innerhalb der beiden Druckkammern 121 und 125 ist jeweils ein Kolben 127a, 127b geführt, die über eine abgedichtet durch eine Öffnung der Trennand 123 geführte Kolbenstange 129 mechanisch miteinander verbunden sind. Zwischen dem Kolben 127a und der Trennwand 123 ist/sind eine oder mehrere Druckfedern 131 angeordnet. Die Kolbenstange 129 kann - wie dargestellt - hohl ausgebildet sein, so daß sie die Druckkammern 121 und 125 verbindet; jedoch ist in dieser Verbindung ein Rückschlagventil 133 derart angeordnet, daß im Falle eines Druckabfalls in der ersten Druckkammer 121 der Druck in der zweiten Druckkammer 125 über das Rückschlagventil 133 entweichen kann.

Die Druckumkehr-Funktion des Steuerventils 124 ist nun wie folgt. Ein hoher eingangsseitiger Druck in der ersten Druckkammer 121 bewirkt eine Verschiebung der Kolben 127a, 127b gegen die Kraft der Feder(n) 131, so daß sich das Volumen der zweiten Druckkammer 125 zwischen der Trennwand 123 und dem Kolben 127b vergrößert, was eine Reduzierung des ausgangsseitigen Druckes der zweiten Druckkammer 125 zur Folge hat ("Druckumkehr"). Bei geringem eingangsseitigen Druck der ersten Druckkammer 121 verschieben sich die Kolben 127a, b federkraftbedingt in entgegengesetzte Richtung, so daß durch eine Volumenreduzierung der ausgangsseitige Druck der zweiten Druckkammer 125 steigt (ebenfalls "Druckumkehr").

Im folgenden soll nun die Wirkungsweise der erfindungsgemäßen, lastabhängigen Dämpfungseinstellung erläutert werden.

Als Druckquelle für die Beaufschlagung der Druckmittelkammer 108 wird erfindungsgemäß über das Schaltventil 122 und in der Ausführung nach Fig. 4 über das Druckumkehr-Steuerventil 124 der in dem Ausgleichsraum 32 der Zylinderkolbeneinheit 2 herrschende, lastabhängige Druck verwendet, der dem Druck innerhalb des Gasspeichers 34 entspricht. Dieser Druck stellt sich in Abhängigkeit von der Belastung der Zylinderkolbeneinheit 2 ein; der Druck ist umso größer, je größer die Belastung ist und umgekehrt.

Durch die Ansteuerung der Stellmittel 100 des Dämpfungsventils 60 mit dem lastabhängigen Druck innerhalb des Ausgleichsraums 32 kann vorteilhafterweise die Dämpfung an die jeweilige statische Last angepaßt werden. Hierzu wird nach einer statischen Änderung der Belastung (vgl. auch das Diagramm in Fig. 3) einmal durch kurzzeitiges Betätigen des Schaltventils 122 oder aber dauernd, d.h. "dynamisch", der Druck in dem Ausgleichsraum 32 "abgefragt", d.h. über die Verbindungsleitung 120 direkt (Fig. 5) oder aber mit einer über das Steuerventil 124 "umgekehrten" Größe (Fig. 4) in die Druckmittelkammer 108 geleitet. Je nach Höhe des jeweils im Gasspeicher 34 bzw. in dem Ausgleichsraum 32 vorhandenen Druckes strömt dann Druckmittel entweder in die Druckmittelkammer 108 hinein oder aus der Druckmittelkammer 108 heraus. Je höher der Druck innerhalb der Druckmittelkammer 108 ist, desto mehr wird gegen die Vorspannung der Stellfeder 112 gewirkt, wodurch über die Kolbenstange 114 die Vorspannung der Federn 98 der Drosselventile 88 bis 94 jeweils verändert wird.

In der Ausführung nach Fig. 4 ist im unbelasteten Zustand der Zylinderkolbeneinheit 2 in dem Ausgleichsraum 32 ein geringer Druck vorhanden. Dieser geringe Druck wird über das Schaltventil 122 in die erste Druckkammer 121 des Steuerventils 124 geleitet. Dieses Steuerventil 124 bewirkt in der oben bereits beschriebenen Weise eine Druckumkehr, so daß in der zweiten Druckkammer 125 ein hoher Druck vorhanden ist, der über die Verbindungsleitung 120 in die Druckmittelkammer 108 des Dämpfungsventils 60 geleitet wird. Dieser hohe Druck wirkt der Stellfeder 112 entgegen, so daß sich die Kolbenstange 114 geringfügig in Richtung der Stellfeder 112 verschiebt. Dies bewirkt eine Verringerung der Vorspannung aller Federn 98 der Drosselventile, und zwar im Falle der Drosselventile 90 und 94 bedingt durch die Kraftumkehrelemente 117. Dies hat zur Folge, daß bei einer geringen Belastung der Zylinderkolbeneinheit 2 auch eine geringe Dämpfung sowohl in Ein- als auch in Ausfederungsrichtung gewährleistet ist. Demgegenüber wird bei einer hohen Belastung der hohe Druck des Ausgleichsraums 32 über das Steuerventil 124 in einen niedrigen Druck umgekehrt, so daß dieser niedrige Druck auch in der Druckmittelkammer 108 des Dämpfungsventils 60 vorhanden ist. Demzufolge kann die Vorspannung der Stellfeder 112 die Vorspannung der einzelnen Federn 98 der Drosselventile vergrößern, so daß im belasteten Zustand eine hohe Dämpfung in Ein- und Ausfederungsrichtung gewährleistet ist.

Bei einem eventuellen Druckabfall auf der Seite des Gasspeichers 34 bzw. des Ausgleichsraums 32 wirkt das Steuerventil 124 als Sicherheitsventil, welches in diesem Fall eine maximale Dämpfung bewirkt. Dies erfolgt dadurch, daß bei einem Druckabfall in der ersten Druckkammer 121 das Rückschlagventil 133 öffnet, so daß hierdurch über die Verbindungsleitung 120 auch die Druckmittelkammer 108 drucklos wird und die Federn 98 der Drosselventile von der Stellfeder 112 mit maximaler Vorspannung beaufschlagt werden.

Durch die Ausgestaltung nach Fig. 5 wird demgegenüber erreicht, daß bei einer hohen Belastung eine geringe Einfederungsdämpfung und eine hohe Ausfederungsdämpfung und bei einer geringen Belastung zur Unterstützung der Feder und zum Verhindern von "durchschlagen" eine hohe Einfederungsdämpfung und eine geringe Ausfederungsdämpfung eingestellt werden, wie sich dies aus den in Fig. 3 zusätzlich zu den voll gezeichneten Federkennlinien gestrichelt eingezeichneten Dämpfungskennlinien ergibt. Dies erfolgt nun dadurch, daß im geringbelasteten Zustand der niedrige Druck des Ausgleichsraums 32 über die Verbindungsleitung 120 der Druckmittelkammer 108 zugeführt wird. Hierdurch kann die Stellfeder 112 über die Kolbenstange 114 die Federn der einzelnen Drosselventile hinsichtlich ihrer Vorspannung wie folgt verändern: Vergrößerung der Vorspannung der Federn 98 bei den Drosselventilen 90 und 94 (über die Kraftumkehrelemente 117); Verringerung der Vorspannung bei den Drosselventilen 88 (direkt) und 92 (über das Kraftumkehrelement 117). Im belasteten Zustand der Zylinderkolbeneinheit 2 ist in der Druckmittelkammer 108 ein hoher Druck vorhanden, der der Vorspannung der Stellfeder 112 entgegenwirkt, so daß die Vorspannungen der einzelnen Federn 98 wie folgt verändert werden: Verringerung der Vorspannung bei den Drosselventilen 90 und 94; Vergrößerung der Vorspannung bei den Drosselventilen 88 und 92.

In Fig. 6 ist eine weitere Alternative beispielhaft dargestellt, wobei jedoch auch noch weitere Alternativen hierzu denkbar wären. Bei dieser Ausführung werden bei geringem Druck in der Druckmittelkammer 108 über die Stellfeder 112 die Vorspannungen der Drosselventile 88 und 92 erhöht und die Vorspannungen der Drosselventile 90 und 94 verringert. Bei hohem Druck in der Druckmittelkammer 108 wird der Vorspannung der Feder 112 entgegengewirkt, so daß die Vorspannungen bei den Drosselventilen 88 und 92 verringert und bei den Drosselventilen 90 und 94 erhöht werden. Hierbei kann ggf. über ein Druckumkehrventil analog zu dem Steuerventil 124 gemäß Fig. 4 eine Umkehrung dieser Funktion erreicht werden.

Durch eine geeignete Ausgestaltung des Dämpfungsventils 60 kann auch erreicht werden, daß die Ausfederungsdämpfung proportional zur Last, die Einfederungsdämpfung dagegen umgekehrt proportional zur Last gesteuert wird.

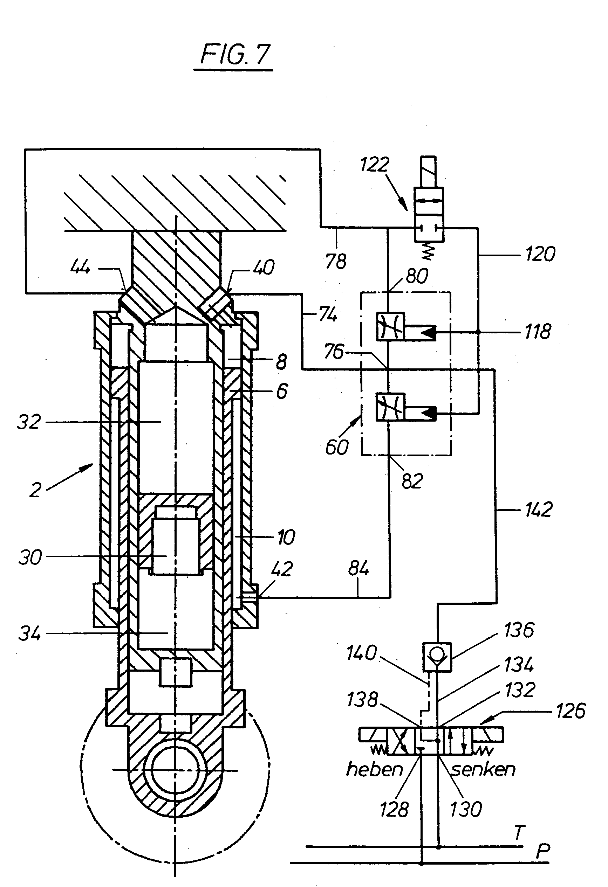

In einer in Fig. 7 prinzipiell dargestellten, vorteilhaften Weiterbildung der Erfindung ist eine lastabhängige Nivellierung der hydropneumatischen Zylinderkolbeneinheit 2 möglich, was insbesondere für die Anwendung in Fahrzeugen besonders vorteilhaft ist, da hierdurch unabhängig vom Belastungszustand denen Bodenfreiheit etwa konstant gehalten werden kann, und zwar statisch und/oder dynamisch. Dies ist in Fig. 3 zu erkennen, da die statische bzw. neutrale Stellung "0" in beiden Belastungsfällen gleich ist, und zwar obwohl der Druck bzw. die Kraft "F" des Gasspeichers 34 unterschiedlich ist. Hierdurch ist das erfindungsgemäße Federungssystem sehr komfortabel, da maximale Ein-und Ausfederungswege "+ X" und "- X" gewährleistet bleiben.

In dem in Fig. 7 dargestellten Hydraulik-Schaltplan ist das Dämpfungsventil 60 stark vereinfacht durch ein Schaltungssymbol dargestellt. Dabei sind dennoch gleiche Teile mit den gleichen Bezugsziffern wie in den bereits beschriebenen Figuren bezeichnet.

Mindestens ein Nivellierventil 126 ist nun an ein Hydrauliksystem insbesondere eines Kraftfahrzeugs angeschlossen, und zwar mit einem ersten Eingang 128 an eine Druckleitung P und mit einem zweiten Eingang 130 an eine Rücklaufleitung T. Ein Strömungsausgang 132 des Nivellierventils 126 ist über eine Verbindungsleitung 134 mit einem Rückschlagventil 136 verbunden. Ein Steuerausgang 138 des Nivellierventils 126 ist über eine gestrichelt gezeichnete Steuerleitung 140 ebenfalls mit dem Rückschlagventil 136 verbunden. Das Rückschlagventil 136 ist ausgangsseitig über eine Verbindungsleitung 142 mit der oberen Ringkammer 8 der hydropneumatischen Zylinderkolbeneinheit 2 verbunden, wozu die Verbindungsleitung 142 an einer geeigneten Stelle, beispielsweise an dem Anschluß 40 oder - wie dargestellt - an dem Abschluß 76 des Dämpfungsventils 60 angeschlossen sein kann.

Das Nivellierventil 126 ist derart ausgebildet, daß in einer ersten Schaltstellung (Heben) der erste Eingang 128 mit dem Strömungsausgang 132 und der zweite Eingang 130 mit dem Steuerausgang 138 verbunden sind. Demgegenüber sind in einer zweiten Schaltstellung (Senken) der erste Eingang 128 mit dem Steuerausgang 138 sowie der zweite Eingang 130 mit dem Strömungsausgang 132 verbunden. In der in Fig. 7 dargestellten Ruhestellung ist der Druckanschluß P verschlossen, und beide Ausgänge 132 und 138 sind mit dem zweiten, mit der Rücklaufleitung T verbundenen Eingang 130 verbunden.

Im folgenden wird nun die Wirkungsweise der Nivellierung beschrieben.

Bei einer Belastung der Zylinderkolbeneinheit 2 verschiebt sich der Kolben 6 in den Zylinder 4 hinein, bis der Druck im Gasspeicher 34 auf einen der höheren Belastung entsprechenden Druck angestiegen ist. Der Trennkolben 30 zwischen dem Gasspeicher 34 und dem Ausgleichsraum 32 wird hierbei nach unten verschoben. Im Falle der Verwendung der Zylinderkolbeneinheit 2 in einem Fahrzeug hat dies ein Absenken und damit eine Reduzierung der Bodenfreiheit des Fahrzeugs zur Folge. Dem soll über die Nivellierung entgegengewirkt werden.

Hierzu wird das Nivellierventil 126 in die erste Schaltstellung geschaltet, so daß aus der Fahrzeughydraulik Hydraulikmedium über das Rückschlagventil 136 und die Verbindungsleitung 142 der oberen Ringkammer 8 der Zylinderkolbeneinheit 2 zugeführt wird. Hierdurch verschiebt sich der Kolben 5 innerhalb des Zylinders 4 nach unten, wodurch das Fahrzeug entsprechend angehoben wird. Hierbei strömt auch eine entsprechende Menge Hydraulikmedium aus der unteren Ringkammer 10 in die obere Ringkammer 8. In den Ausgleichsraum 32 strömt allerdings kein Hydraulikmittel, da ja die Belastung und damit auch der Druck innerhalb des Gasspeichers 34 sowie die Lage des Trennkolbens 30 jetzt konstant bleiben. Bei Erreichen eines gewünschten Niveaus bzw. einer gewünschten Bodenfreiheit eines Fahrzeugs wird das Nivellierventil 126 wieder in seine Ruhestellung geschaltet.

Zum Absenken wird das Nivellierventil 126 in seine zweite Schaltstellung geschaltet, wodurch über die Steuerleitung 140 das Rückschlagventil 136 hydraulisch geöffnet wird. Hierdurch kann Hydraulikmittel aus der oberen Ringkammer 8 über die Verbindungsleitung 142, das Rückschlagventil 136, die Verbindungsleitung 134 und das Nivellierventil 126 zur Rücklaufleitung T zurückfließen. Hierdurch erfolgt ein Absenken der Zylinderkolbeneinheit 2. Nach Erreichen eines gewünschten Niveaus wird das Nivellierventil 126 wieder in seine Ruhestellung geschaltet, wodurch das Rückschlagventil 136 wieder schließt.

Wird das erfindungsgemäße Federungssystem mit Nivellierung z.B. in einem Kraftwagen verwendet, so kann die jeweilige Niveaulage über vorzugsweise induktive Wegmesser festgestellt werden. Die Einstellung der Niveaulage erfolgt dann durch automatisches Betätigen des Nivellierventils 126 beispielsweise mittels einer elektronischen Steuerung.

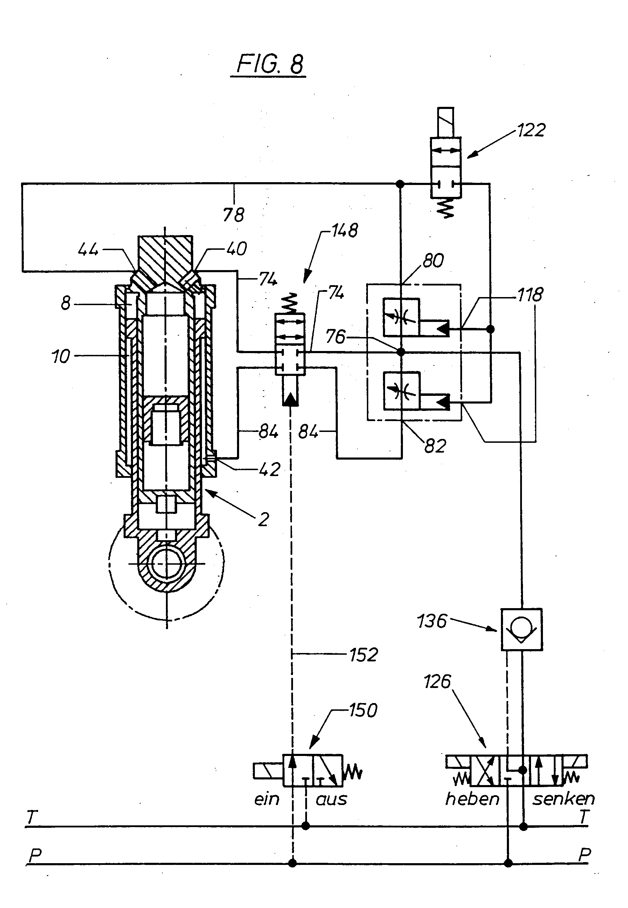

In Fig. 8 ist eine weitere Ausgestaltung des erfindungsgemäßen hydropneumatischen Federungssystems veranschaulicht. Dabei handelt es sich um eine "Blockierung" der hydropneumatischen Zylinderkolbeneinheit 2.

Hierzu ist vorgesehen, daß die hydraulische Verbindung zwischen den beiden Ringkammern 8 und 10 der Zylinderkolbeneinheit 2 über ein Sperrventil 148 absperrbar ist. Dieses Sperrventil 148 ist dabei - wie in Fig. 8 zu erkennen - in vorzugsweise beide Verbindungsleitungen 74 und 84 zwischen den Anschlüssen 40 und 42 der Zylinderkolbeneinheit 2 und den Anschlüssen 76 und 82 des Dämpfungsventils 60 geschaltet. Bei Unterbrechung der Verbindungsleitungen 74 und 84 ist der Kolben 6 zwischen dem Hydraulikmedium in den beiden Ringkammern 8 und 10 "eingespannt"; die Zylinderkolbeneinheit 2 ist dadurch "blockiert".

Aus Sicherheitsgründen ist dabei nun die Blockierung derart, daß bei einem eventuellen Ausfall der Stromversorgung die Blockierung zwangsweise aufgehoben wird. Hierzu ist das Sperrventil 148 als z.B. hydraulisch betätigbares Ventil mit einer durch Federkraft erzeugten Ruhestellung ausgebildet, in der die Verbindung zwischen den Ringkammern 8 und 10 hergestellt ist. Wird das Sperrventil 148 dagegen mit Druck beaufschlagt, so schaltet es in seine Sperrstellung. Diese Druckbeaufschlagung erfolgt nun über ein elektromagnetisch betätigbares Blockierventil 150, welches einen mit der Druckleitung P verbundenen Eingang sowie einen mit der Rücklaufleitung T verbundenen Eingang aufweist. Ein Ausgang des Blockierventils 150 ist über eine gestrichelt gezeichnete Steuerleitung 152 zur Betätigung des Sperrventils 148 mit diesem verbunden. Das Blockierventil 150 bewirkt in seiner federkraftbedingten Ruhestellung eine Verbindung der Steuerleitung 152 mit der Rücklaufleitung T sowie in seiner elektromagnetisch betätigten Schaltstellung - in Fig. 8 dargestellt - eine Verbindung der Steuerleitung 152 mit der Druckleitung P zur Beaufschlagung und Betätigung des Sperrventils 148. Bei einem eventuellen Stromausfall wird aufgrund dieser erfindungsgemäßen Schaltung vorteilhafterweise das Blockierventil 150 durch Federkraft in seine Ruhestellung gebracht, wodurch die Steuerleitung 152 von der Druckleitung P zur Rücklaufleitung T umgeschaltet wird, so daß auch das Sperrventil 148 federkraftbedingt in seine Ruhestellung schaltet, in der die Verbindung zwischen den Ringkammern 8 und 10 hergestellt und somit die Blockierfunktion aufgehoben ist.

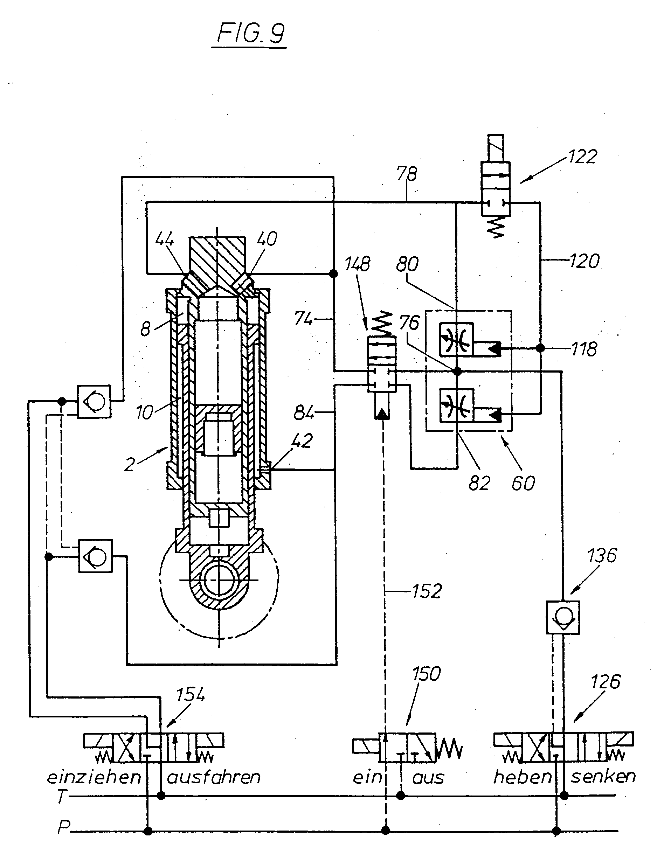

Wie weiterhin in Fig. 9 beispielhaft dargestellt ist, kann über ein geeignetes Stellventil 154 die Zylinderkolbeneinheit 2 beliebig angehoben oder abgesenkt werden, wozu wahlweise entweder die Druckleitung P mit der oberen Ringkammer und dabei die untere Ringkammer 10 mit der Rücklaufleitung T (Anheben) oder Druckleitung P mit der unteren Ringkammer 10 und dabei die obere Ringkammer mit der Rücklaufleitung T (Absenken) verbunden wird. Diese Maßnahme ist im Gegensatz zu der oben beschriebenen "Nivellierung" vorteilhafterweise unabhängig von der jeweiligen Belastung der Zylinderkolbeneinheit 2.

Das erfindungsgemäße hydropneumatische Federungssystem bietet insbesondere bei Verwendung in Kraftfahrzeugen folgende wesentliche Vorteile:
a) Im Vergleich zu bekannten, mechanischen Federungssystemen (Blattfeder, Federstab, Schraubenfeder oder dergleichen) wesentlich besseres und komfortableres Fahrverhalten;
b) Möglichkeit einer lastabhängigen Dämpfungseinstellung;
c) Möglichkeit für einen automatischen Niveausausgleich zum Ausgleich unterschiedlicher Beladung des Fahrzeugs;
d) Möglichkeit zur Blockierung der Federung;
e) Möglichkeit zur selbsttätigen Einstellung des Fahrzeuges in die Horizontale, und zwar sowohl während der Fahrt als auch im Stillstand;
f) Möglichkeit für Veränderungen der Niveaulage des Fahrzeuges während der Fahrt sowie im Stillstand (Geländefahrt bzw. Straßenfahrt); und
g) Möglichkeit für ein Einziehen und Ausfahren einzelner Räder oder Achsen.

Dabei ist das erfindungsgemäße Federungssystem so aufgebaut, daß die genannten Funktionen durch einfach realisierbare Erweiterungen einer Grundeinheit erreicht werden können.

Die Erfindung ist nicht auf die dargestellten und beschriebenen Ausführungsformen beschränkt, sondern umfaßt auch alle im Sinne der Erfindung gemäß den folgenden Ansprüchen gleichwirkenden Ausführungen.

## Patentansprüche

1. Hydropneumatisches Federungssystem mit mindestens einem Stoß- und Schwingungsdämpfer mit einer zylinderkolbeneinheit (2), einem Gasspeicher (34) und einem Dämpfungsventil (60) mit im Hydraulikkreislauf angeordneten Drosselventilen (88, 90, 92, 94),
**dadurch gekennzeichnet,** daß die Drosselventile (88, 90, 92, 94) in Schließ- oder Öffnungsrichtung mit Federn (98) vorgespannte Ventilelemente (96) aufweisen und die Vorspannung der Federn (98) über auf diese gemeinsam wirkende Stellmittel (100) veränderbar ist.

2. Federungssysstem nach Anspruch 1,
**dadurch gekennzeichnet,** daß die Stellmittel (100) eine unter Vorspannung stehende Stellfeder (112) sowie eine die Vorspannung der Stellfeder (102) auf die Federn (98) der Ventilelemente (96) im Sinne einer Vergrößerung oder Verringerung von deren Vorspannung übertragende Kolbenstange (114) aufweisen.

3. Federungssystem nach Anspruch 2,
**dadurch gekennzeichnet,** daß die Kolbenstange (114) mit einem mit einem insbesondere hydraulischen Druckmedium beaufschlagbaren Kolben (106) verbunden ist, der im Sinne einer Vergrößerung oder Verringerung der Vorspannung der Stellfeder (112) mit dieser zusammenwirkt.

4. Federungssystem nach Anspruch 3,
**dadurch gekennzeichnet,** daß die Stellfeder (112) in bezug auf den Kolben (106) derart angeordnet ist, daß bei einer Erhöhung des auf den Kolben (106) wirkenden, insbesondere hydraulischen Druckes die von der Vorspannung der Stellfeder (112) erzeugte und über die Kolbenstange (114) übertragene Kraft reduziert wird.

5. Federungssystem nach einem oder mehreren der Ansprüche 1 bis 4,
**dadurch gekennzeichnet,** daß das Dämpfungsventil (60) von der Zylinderkolbeneinheit (2) räumlich getrennt ausgebildet ist.

6. Federungssystem nach einem oder mehreren der Ansprüche 1 bis 5,
**dadurch gekennzeichnet,** daß das Dämpfungsventil (60) für die Einfederungsdämpfung mindestens zwei parallel geschaltete Drosselventile (90, 94) mit einem gemeinsamen Eingang und getrennten Ausgängen aufweist.

7. Federungssystem nach einem oder mehreren der Ansprüche 1 bis 6,
**dadurch gekennzeichnet,** daß das Dämpfungsventil (60) für die Ausfederungsdämpfung mindestens zwei parallel geschaltete Drosselventile (88, 92) mit getrennten Eingängen und einem gemeinsamen Ausgang aufweist.

8. Federungssystem nach Anspruch 6 und 7,
**dadurch gekennzeichnet,** daß der Eingang der Einfederungs-Drosselventile (90, 94) und der Ausgang der Ausfederungs-Drosselventile (88, 92) in einem ersten Anschluß (76) zusammenfallen, und daß die Ausgänge der Einfederungs-Drosselventile (90, 94) mit den Eingängen der Ausfederungs-Drosselventile (88, 92) jeweils in einem zweiten Anschluß (80) und einem dritten Anschluß (82) zusammenfallen.

9. Federungssystem nach Anspruch 1 bis 8,
**dadurch gekennzeichnet,** daß die Zylinderkolbeneinheit (2) einen Hydraulikzylinder (4), einen in diesem axialbeweglich geführten, innerhalb des Zylinders (4) zwei mit Hydraulikmedium gefüllte Kammern (8, 10) abteilenden Kolben (6), eine mit dem Kolben (6) verbundene, aus dem Zylinder (4) nach außen geführte Kolbenstange (12), einen mit der der Kolbenstange (12) abgekehrten, oberen Kammer (8) verbundenen Ausgleichsraum (32) sowie den über einen schwimmenden Trennkolben (30) von dem Ausgleichsraum (32) getrennten Gasspeicher (34) aufweist, wobei die Kammern (8, 10) miteinander sowie die obere Kammer (8) mit dem Ausgleichsraum (32) jeweils über das Dämpfungsventil (60) verbunden sind.

10. Federungssystem nach Anspruch 9,
**dadurch gekennzeichnet,** daß die obere Kammer (8) über eine Verbindungsleitung (74) mit dem ersten Anschluß (76) des Drosselventils (60), die andere, untere Kammer (10) über eine Verbindungsleitung (84) mit dem dritten Drosselventil-Anschluß (82) sowie der Ausgleichsraum (32) über eine Verbindungsleitung (78) mit dem zweiten Drosselventil-Anschluß (80) verbunden sind.

11. Federungssystem nach Anspruch 9 oder 10,
**dadurch gekennzeichnet,** daß die Kolbenstange (12) hohlzylindrisch sowie der Kolben (6) ringförmig ausgebildet sind,
und daß innerhalb des Zylinders (4) koaxial zu diesem ein sich mit geringem Umfangsspiel durch den ringförmigen Kolben (6) hindurch und in die hohlzylindrische Kolbenstange (12) hinein erstreckendes Innenrohr (22) angeordnet ist, wobei der den Ausgleichsraum (32) von dem Gasspeicher (34) trennende Trennkolben (30) innerhalb des Innenrohrs (22) geführt ist.

12. Federungssystem nach Anspruch 11,
**dadurch gekennzeichnet,** daß das Innenrohr (22) an einem dem freien Ende der Kolbenstange (12) gegenüberliegenden Kopfteil (18) des Zylinders (4) befestigt ist, wobei der Ausgleichsraum (32) innerhalb des Innenrohres (6) zwischen dem Kopfteil (18) und dem Trennkolben (30) angeordnet ist.

13. Federungssystem nach einem oder mehreren der Ansprüche 3 bis 12,
**dadurch gekennzeichnet,** daß das Dämpfungsventil (60) eine Zylinderkammer (104) aufweist, in der der mit der Stellfeder (112) zusammenwirkende Kolben (106) geführt ist, wobei der Kolben (106) die Zylinderkammer (104) in eine die Stellfeder (112) aufnehmende Federkammer (110) und eine Druckmittelkammer (108) unterteilt.

14. Federungssystem nach Anspruch 13,
**dadurch gekennzeichnet,** daß die Druckmittelkammer (108) unmittelbar oder mittelbar über ein Schaltventil (122) mit dem Ausgleichsraum (32) der Zylinderkolbeneinheit (2) verbunden ist.

15. Federungssystem nach Anspruch 13 oder 14,
**dadurch gekennzeichnet,** daß die Druckmittelkammer (108) über ein Steuerventil (124) zur Druckumkehr mit dem Ausgleichsraum (32) verbunden ist.

16. Federungssystem nach einem oder mehreren der Ansprüche 10 bis 15,
**dadurch gekennzeichnet,** daß das Dämpfungsventil (60) ein Ventilgehäuse (62) mit vier hintereinander angeordneten, über Trennwände (63, 64, 65) getrennten Ventilkammern (66, 68, 70, 72) aufweist, wobei die erste Ventilkammer (66) den ersten Anschluß (76), die zweite Ventilkammer (68) den zweiten Anschluß (80) und die vierte Ventilkammer (72) den dritten Anschluß (82) aufweisen.

17. Federungssystem nach Anspruch 16,
**dadurch gekennzeichnet,** daß die erste Ventilkammer (66) einerseits unmittelbar mit der dritten Ventilkammer (70) sowie andererseits über das erste Einfederungs-Drosselventil (90) und das erste Ausfederungs-Drosselventil (88) mit der zweiten Ventilkammer (68) verbunden ist, und daß die dritte Ventilkammer (70) über das zweite Einfederungs-Drosselventil (94) und das zweite Ausfederungs-Drosselventil (92) mit der vierten Ventilkammer (72) verbunden ist.

18. Federungssystem nach Anspruch 16,
**dadurch gekennzeichnet,** daß die erste Ventilkammer (66) einerseits unmittelbar mit der dritten Ventilkammer (70) sowie andererseits über das erste Einfederungs-Drosselventil (90) mit der zweiten Ventilkammer (68) verbunden ist, und daß die dritte Ventilkammer (70) einerseits mit der zweiten Ventilkammer (68) über das erste Ausfederungs-Drosselventil (88) sowie andererseits über das zweite Einfederungs-Drosselventil (94) und das zweite Ausfederungs-Drosselventil (92) mit der vierten Ventilkammer (72) verbunden ist.

19. Federungssystem nach einem oder mehreren der Ansprüche 16 bis 18,
**dadurch gekennzeichnet,** daß sich die Kolbenstange (114) von der Zylinderkammer (104) durch die Ventilkammern (66 bis 72) erstreckt und im Bereich der Ventilelemente (96) der Drosselventile (88 bis 94) Widerlagerelemente (116) aufweist, wobei jeweils zwischen dem Ventilelement (96) und dem zugeordneten Widerlagerelement (116) oder einem mit diesem zusammenwirkenden, insbesondere wippenartigen Kraftumkehrelement (117) die Feder (98) unter Vorspannung angeordnet ist.

20. Federungssystem nach einem oder mehreren der Ansprüche 9 bis 19,
**gekennzeichnet durch** mindestens ein Nivellierventil (126), welches eingangsseitig mit einer Druckleitung (P) und einer Rücklaufleitung (T) und ausgangsseitig mit der oberen Kammer (8) der Zylinderkolbeneinheit (2) verbunden und derart ausgebildet ist, daß die obere Kammer (8) wahlweise mit der Druckleitung (P) oder der Rücklaufleitung (T) verbindbar ist.

21. Federungssystem nach einem oder mehreren der Ansprüche 9 bis 20,
**dadurch gekennzeichnet,** daß in der Verbindung zwischen den beiden Kammern (8, 10) der Zylinderkolbeneinheit (2) ein Sperrventil (148) angeordnet ist,
wobei das Sperrventil (148) in einer Arbeitsstellung die Verbindung zwischen den Kammern (8, 10) unterbricht und in einer federkraftbedingten Ruhestellung die Kammern (8, 10) miteinander verbindet.

22. Federungssystem nach Anspruch 21,
**dadurch gekennzeichnet,** daß das Sperrventil (148) über ein elektromagnetisches Blockierventil (150) hydraulisch betätigbar ist.

23. Federungssystem nach einem oder mehreren der Ansprüche 9 bis 22,
**gekennzeichnet durch** mindestens ein Stellventil (154), über das wahlweise die obere Zylinder-Kammer (8) mit einer Rücklaufleitung (T) und die untere Zylinder-Kammer (10) mit einer Druckleitung (p) oder umgekehrt verbindbar sind.

## Claims

1. Hydropneumatic suspension system having at least one shock and oscillation damper with a piston-and-cylinder unit (2), a gas store (34) and a damping valve (60) having choke valves (88, 90, 92, 94) arranged in the hydraulic circuit, characterized in that the choke valves (88, 90, 92, 94) have valve elements (96) which are pre-tensioned by springs (98) in the direction of closing or opening, and the pre-tension of the springs (98) can be altered by way of actuators (100) acting jointly thereon.

2. Suspension system according to Claim 1, characterized in that the actuators (100) have an actuating spring (112) which is under pre-tension and a piston rod (114) which transmits the pre-tension of the actuating spring (102) to the springs (98) of the valve elements (96) so as to increase or reduce the pre-tension thereof.

3. Suspension system according to Claim 2, characterized in that the piston rod (114) is connected to a piston (106) which can be acted upon by an in particular hydraulic compressed medium and which cooperates with the actuating spring (112) so as to increase or reduce the pre-tension thereof.

4. Suspension system according to Claim 3, characterized in that the actuating spring (112) is arranged in relation to the piston (106) such that if the in particular hydraulic pressure acting on the piston (106) is increased the force produced by the pre-tension of the actuating spring (112) and transmitted by way of the piston rod (114) is reduced.

5. Suspension system according to one or more of Claims 1 to 4, characterized in that the damping valve (60) is constructed spatially separated from the piston-and-cylinder unit (2).

6. Suspension system according to one or more of Claims 1 to 5, characterized in that the damping valve (60) for the inward spring deflection damping has at least two choke valves (90, 94) arranged in parallel and having a common input and separate outputs.

7. Suspension system according to one or more of Claims 1 to 6, characterized in that the damping valve (60) for the outward spring deflection damping has at least two choke valves (88, 92) connected in parallel and having separate inputs and a common output.

8. Suspension system according to Claim 6 and 7, characterized in that the input of the inward spring deflection choke valves (90, 94) and the output of the outward spring deflection choke valves (88, 92) coincide at a first connection point (76), and in that the outputs of the inward spring deflection choke valves (90, 94) coincide with the inputs of the outward spring deflection choke valves (88, 92) respectively at a second connection point (80) and a third connection point (82).

9. Suspension system according to Claim 1 to 8, characterized in that the piston-and-cylinder unit (2) has a hydraulic cylinder (4), a piston (6) which is guided axially movably therein and within the cylinder (4) divides off two chambers (8, 10) filled with hydraulic medium, a piston rod (12) which is connected to the piston (6) and is guided outwards out of the cylinder (4), a compensation space (32) which is connected to the upper chamber (8) remote from the piston rod (12), and the gas store (34), which is separated from the compensation space (32) by way of a floating separating piston (30), the chambers (8, 10) being connected to one another and the upper chamber (8) being connected to the compensation space (32) in each case by way of the damping valve (60).

10. Suspension system according to Claim 9, characterized in that the upper chamber (8) is connected by way of a connection line (74) to the first connection point (76) of the choke valve (60), the other, lower chamber (10) is connected by way of a connection line (84) to the third choke valve connection point (82), and the compensation space (32) is connected by way of a connection line (78) to the second choke valve connection point (80).

11. Suspension system according to Claim 9 or 10, characterized in that the piston rod (12) is constructed to be hollow-cylindrical and the piston (6) is constructed to be annular, and in that within the cylinder (4) and coaxial therewith there is arranged an internal tube (22) extending through the annular piston (6) and into the hollow-cylindrical piston rod (12), the separating piston (30) which separates the compensation space (32) from the gas store (34) being guided within the internal tube (22).

12. Suspension system according to Claim 11, characterized in that the internal tube (22) is secured to a head part (18) of the cylinder (4) which is opposite the free end of the piston rod (12), the compensation space (32) being arranged within the internal tube (6) between the head part (18) and the separating piston (30).

13. Suspension system according to one or more of Claims 3 to 12, characterized in that the damping valve (60) has a cylinder chamber (104) in which there is guided the piston (106) cooperating with the actuating spring (112), the piston (106) dividing the cylinder chamber (104) into a spring chamber (110) receiving the actuating spring (112) and a compressed medium chamber (108).

14. Suspension system according to Claim 13, characterized in that the compressed medium chamber (108) is connected, directly or indirectly by way of a switching valve (122) to the compensation space (32) of the piston-and-cylinder unit (2).

15. Suspension system according to Claim 13 or 14, characterized in that the compressed medium chamber (108) is connected to the compensation space (32) by way of a control valve (124) for reversing the pressure.

16. Suspension system according to one or more of Claims 10 to 15, characterized in that the damping valve (60) has a valve housing (62) with four valve chambers (66, 68, 70, 72) which are arranged one behind the other and are separated by separating walls (63, 64, 65), the first valve chamber (66) having the first connection point (76), the second valve chamber (68) having the second connection point (80) and the fourth valve chamber (72) having the third connection point (82).

17. Suspension system according to Claim 16, characterized in that the first valve chamber (66) is connected on the one hand directly to the third valve chamber (70) and on the other hand to the second valve chamber (68) by way of the first inward spring deflection choke valve (90) and the first outward spring deflection choke valve (88), and in that the third valve chamber (70) is connected to the fourth valve chamber (72) by way of the second inward spring deflection choke valve (94) and the second outward spring deflection choke valve (92).

18. Suspension system according to Claim 16, characterized in that the first valve chamber (66) is connected on the one hand directly to the third valve chamber (70) and on the other hand by way of the first inward spring deflection choke valve (90) to the second valve chamber (68), and in that the third valve chamber (70) is connected on the one hand to the second valve chamber (68) by way of the first outward spring deflection choke valve (88) and on the other hand to the fourth valve chamber (72) by way of the second inward spring deflection choke valve (94) and the second outward spring deflection choke valve (92).

19. Suspension system according to one or more of Claims 16 to 18, characterized in that the piston rod (114) extends from the cylinder chamber (104) through the valve chambers (66 to 72) and, in the region of the valve elements (96) of the choke valves (88 to 94), have abutment elements (116), in each case the spring (98) being arranged under pre-tension between the valve element (96) and the associated abutment element (116) or a force reversal element (117) which cooperates with the abutment element (116) and is in particular of the rocker type.

20. Suspension system according to one or more of Claims 9 to 19, characterized by at least one levelling valve (126) which is connected on the input side to a pressurized line (P) and a return line (T) and on the output side to the upper chamber (8) of the piston-and-cylinder unit (2) and is constructed such that the upper chamber (8) can be selectively connected to the pressurized line (P) or to the return line (T).

21. Suspension system according to one or more of Claims 9 to 20, characterized in that there is arranged in the connection between the two chambers (8, 10) of the piston-and-cylinder unit (2) a non-return valve (148), the non-return valve (148) interrupting the connection between the chambers (8, 10) when it is in its working position and connecting the chambers (8, 10) to one another when it is in a rest position determined by spring force.

22. Suspension system according to Claim 21, characterized in that the non-return valve (148) is hydraulically actuable by way of an electromagnetic locking valve (150).

23. Suspension system according to one or more of Claims 9 to 22, characterized by at least one actuating valve (154) by way of which selectively the upper cylinder chamber (8) can be connected to a return line (T) and the lower cylinder chamber (10) can be connected to a pressurized line (P) or vice versa.

## Revendications

1. Système de suspension hydropneumatique comportant au moins un amortisseur de chocs et de vibrations avec un ensemble piston-cylindre (2), un réservoir à gaz (34) et une soupape d'amortissement (60) comprenant des soupapes d'étranglement (88, 90, 92, 94) disposées dans le circuit hydraulique,
caractérisé par le fait que les soupapes d'étranglement (88, 90, 92, 94) comportent des éléments de soupape (96), précontraints dans la direction de fermeture et d'ouverture au moyen de ressorts (98) et que la précontrainte des ressorts (98) peut être variée par des moyens de réglage (100) agissant sur l'ensemble des ressorts.

2. Système de suspension selon la revendication 1,
caractérisé par le fait que les moyens de réglage (100) comportent un ressort d'ajustement (112) sous précontrainte, ainsi qu'une tige de piston (114) transmettant la précontrainte du ressort d'ajustement (102) vers les ressorts (98) des éléments de soupape (96), en vue d'augmenter ou de diminuer leur précontrainte.

3. Système de suspension selon la revendication 2,
caractérisé par le fait que la tige de piston (114) est reliée à un piston (106) sur lequel agit un agent de pression, en particulier un agent hydraulique, ce piston coopérant avec le ressort d'ajustement (112) en vue d'augmenter ou de diminumer la précontrainte de celui-ci.

4. Système de suspension selon la revendication 3,
caractérisé par le fait que le ressort d'ajustement (112) est disposé par rapport au piston (106) de manière telle que, lorsque la pression, en particulier la pression hydraulique, agissant sur le piston (106) augmente, la force engendrée par la précontrainte du ressort d'ajustement (112) et transmise au moyen de la tige de piston (114) est réduite.

5. Système de suspension selon l'une ou plusieurs des revendications 1 à 4,
caractérisé par le fait que la soupape d'amortissement (60) est espacé de l'ensemble cylindre-piston (2).

6. Système de suspension selon l'une ou plusieurs des revendications 1 à 5,
caractérisé par le fait qu'en vue d'amortir la compression du ressort, la soupape d'amortissement (60) comporte au moins deux soupapes d'étranglement (90, 94) montées en parallèle et possédant une entrée commune et des sorties séparées.

7. Système de suspension selon l'une ou plusieurs des revendications 1 à 6,
caractérisé par le fait qu'en vue d'amortir la détente du ressort, la soupape d'amortissement (60) comporte au moins deux soupapes d'étranglement (88, 92) montées en parallèle et possédant des entrées séparées et une sortie commune.

8. Système de suspension selon la revendication 6 et 7,
caractérisé par le fait que l'entrée des soupapes d'étranglement (90, 94) agissant à la compression et la sortie des soupapes d'étranglement (88, 92) agissant à la détente coïncident dans une première liaison (76) et que les sorties des soupapes d'étranglement (90, 94) agissant à la compression coïncident respectivement avec les entrées des soupapes d'étranglement (88, 92) agissant à la détente dans une deuxième liaison (80) et une troisième liaison (82).

9. Système de suspension selon la revendication 1 à 8,
caractérisé par le fait que l'ensemble piston-cylindre (2) comporte un cylindre hydraulique (4), un piston (6) mobile axialement dans celui-ci qui sépare, à l'intérieur du cylindre (4), deux chambres (8, 10) remplies d'un agent hydraulique, une tige de piston (12), reliée au piston (6) et sortant du cylindre (4) vers l'extérieur, un espace de compensation (32) relié à la chambre supérieure (8) opposée à la tige de piston (12), ainsi qu'un réservoir à gaz (34) séparé de l'espace de compensation (32) au moyen d'un piston de séparation flottant (30), les chambres (8, 10) étant reliées entre elles et la chambre supérieure (8) étant reliée en outre à l'espace de compensation (32), respectivement au moyen de la soupape d'amortissement (60).

10. Système de suspension selon la revendication 9,
caractérisé par le fait que la chambre supérieure (8) est reliée, par une conduite de liaison (74), à la première connexion (76) de la soupape d'étranglement (60), la deuxième chambre, inférieure, (10) étant reliée à la troisième connexion (82) de la soupape d'étranglement, au moyen d'une conduite de liaison (84) et l'espace de compensation (32) étant reliée par une conduite de liaison (78) à la deuxième connexion (80) de la soupape d'étranglement.

11. Système de suspension selon la revendication 9 ou 10,
caractérisé par le fait que la tige de piston (12) a la forme d'un cylindre creux et que le piston (6) a une forme annulaire, et qu'à l'intérieur du cylindre (4), coaxialement à celui-ci, est disposé un tube intérieur (22) s'étendant avec un faible jeu périphérique à travers le piston annulaire (6) et à l'intérieur de la tige de piston (12) qui a la forme d'un cylindre creux, le piston (30) séparant l'espace de compensation (32) du réservoir à gaz (34) étant mobile à l'intérieur du tube intérieur (22).

12. Système de suspension selon la revendication 11,
caractérisé par le fait que le tube intérieur (22) est fixé sur une portion de tête (18) du cylindre (4) opposée à l'extrémité libre de la tige de piston (12), l'espace de compensation (32) étant disposé dans le tube intérieur (22) entre la portion de tête (18) et le piston de séparation (30).

13. Système de suspension selon l'une ou plusieurs des revendications 3 à 12,
caractérisé par le fait que la soupape d'amortissement (60) comporte une chambre cylindrique (104) dans laquelle est guidé le piston (106) qui coopère avec le ressort d'ajustement (112), le piston (106) séparant la chambre cylindrique (104) en une chambre (110) d'accueil du ressort d'ajustement (112) et une chambre pour l'agent de pression (108).

14. Système de suspension selon la revendication 13,
caractérisé par le fait que la chambre pour l'agent de pression (108) est reliée directement, ou indirectement au moyen d'une soupape de commande (112), à l'espace de compensation (32) de l'ensemble cylindre-piston (2).

15. Système de suspension selon la revendication 13 ou 14,
caractérisé par le fait qu'en vue d'inverser la pression, la chambre pour l'agent de pression (108) est reliée à l'espace de compensation (32) par une soupape de commande (124).

16. Système de suspension selon l'une ou plusieurs des revendications 10 à 15,
caractérisé par le fait que la soupape d'amortissement (60) comporte un boîtier (62) avec quatre chambres (66, 68, 70, 72) disposées successivement et séparées par des cloisons (63, 64, 65), la première chambre de soupape (66) présentant la première connexion (76), la deuxième chambre (68), la deuxième connexion (80) et la quatrième chambre (72), la troisième connexion (82).

17. Système de suspension selon la revendication 16,
caractérisé par le fait que la première chambre de soupape (66) est reliée d'une part directement à la troisième chambre (70) et, d'autre part, au moyen de la première soupape d'étranglement agissant à la compression (90) et la première soupape d'étranglement agissant à la détente (88), à la deuxième chambre de soupape (68), et que la troisième chambre (70) est reliée, par la deuxième soupape d'étranglement agissant à la compression (94) et la deuxième soupape d'étranglement agissant à la détente (92), à la quatrième chambre de soupape (72).

18. Système de suspension selon la revendication 16,
caractérisé par le fait que la première chambre de soupape (66) est reliée d'une part directement à la troisième chambre de soupape (70) et, d'autre part, par la première soupape d'étranglement agissant à la compression (90), à la deuxième chambre de soupape (68), et que la troisième chambre de soupape (70) est reliée d'une part à la deuxième chambre de soupape (68) au moyen de la première soupape d'étranglement agissant à la détente (88) et, d'autre part, à la quatrième chambre de soupape (72), par la deuxième soupape d'étranglement agissant à la compression (94) et par la deuxième soupape d'étranglement agissant à la détente (92).

19. Système de suspension selon l'une ou plusieurs des revendications 16 à 18,
caractérisé par le fait que la tige de piston (114) s'étend depuis la chambre cylindrique (104) à travers les chambres de soupape (66 à 72) et présente, dans la région des éléments de soupape (96) des soupapes d'étranglement (88 à 94), des éléments de butée (116), le ressort (98) étant disposé sous précontrainte respectivement entre l'élément de soupape (96) et l'élément de butée associé (116) ou un élément d'inversement de la force (117) coopérant avec celui-ci et ayant en particulier la forme d'une bascule.

20. Système de suspension selon l'une ou plusieurs des revendications 9 à 19,
caractérisé par au moins une soupape d'égalisation (126) dont l'entrée est reliée à une conduite de pression (P) et une conduite de retour (T) et dont la sortie est reliée à la chambre supérieure (8) de l'ensemble cylindre-piston (2) et qui est agencée de manière à ce que la chambre supérieure (8) puisse être sélectivement reliée à la conduite de pression (P) ou à la conduite de retour (T).

21. Système de suspension selon l'une ou plusieurs des revendications 9 à 20,
caractérisé par le fait qu'une soupape de blocage (148) est agencée dans la liaison entre les deux chambres (8, 10) de l'ensemble cylindre-piston (2), la soupape de blocage (148) interrompant, dans une position de travail, la liaison entre les chambres (8, 10) et reliant les chambres (8, 10) dans une position de repos conditionnée par la force élastique.

22. Système de suspension selon la revendication 21,
caractérisé par le fait que la soupape de blocage (148) peut être actionnée de manière hydraulique au moyen d'une soupape de blocage électromagnétique (150).

23. Système de suspension selon l'une ou plusieurs des revendications 9 à 22,
caractérisé par au moins une servo-soupape (154) au moyen de laquelle il est possible de relier sélectivement la chambre supérieure (8) du cylindre à une conduite de retour (T) et la chambre (10) du cylindre à une conduite de pression (P) ou inversement.
